# DEMANDE DE BREVET EUROPEEN

(11) **EP 0 623 813 A1**
(43) Date de publication de la demande: **09.11.1994**
(21) Numéro de dépôt: 94400795.4
(22) Date de dépôt: 13.04.1994
(51) Int. Cl.: G01L 5/28

(54) **Procédé et dispositif de contrôle de freinage pour véhicule à quatre roues motrices**

(30) Priorité: 07.05.1993 FR 9305492
(71) Demandeur: MULLER BEM, F-77500 Chelles (FR)
(72) Inventeur: Douine, Denis, F-77400 Lagny Sur Marne (FR); Durand, Gilles, F-77540 Voinsles (FR)
(74) Mandataire: Boutin, Antoine

(57) **Abrégé**

Dans un procédé de contrôle de freinage pour véhicules (1) à roues comportant plusieurs essieux moteurs (2,3) couplés entre eux, chaque essieu (2 ou 3) étant muni d'un différentiel (2c, 3c) on entraîne une roue (3a) à contrôler d'un essieu (3) dans le sens de la marche avant (A), et l'autre roue du même essieu (3) dans le sens de la marche arrière. La vitesse du moyen d'entraînement (7a) de la roue (3a) à contrôler et la vitesse du moyen d'entraînement (7b) de l'autre roue entraînée en marche arrière (B) sont différentes. La différence des deux vitesses est maintenue inférieure à une valeur choisie pour ne pas provoquer de mouvements d'un autre essieu (2) du véhicule (1) extérieur au banc de freinage.

## Description

L'invention est relative à un procédé de freinage pour véhicule à quatre roues motrices, notamment pour véhicules comportant plusieurs essieux moteurs couplés entre eux, chaque essieu étant muni d'un différentiel.

L'invention est également relative à un dispositif de contrôle de freinage pour véhicules à roues du type comportant un banc de freinage pour un essieu, ledit banc de freinage comportant pour chaque roue d'un essieu : une paire de rouleaux d'entraînement, un moyen indicateur de vitesse périphérique de la roue et un moyen capteur de la force d'entraînement de la roue par la paire de rouleaux.

On utilise généralement pour les véhicules à deux roues motrices des bancs de freinage de type connu en soi, comportant deux paires de rouleaux destinés à être entraînés dans le même sens par des moteurs électriques. Les deux roues d'un même essieu du véhicule sont avancées pour se positionner chacune entre les deux rouleaux de la paire correspondante ; puis les roues sont entraînées en rotation en marche avant à basse vitesse de l'ordre de 5 km/heure par l'intermédiaire des rouleaux entraînés par des moteurs électriques. Des moyens indicateurs de la vitesse périphérique des roues sont prévus sous la forme de cylindres en contact tangentiel entraînés en rotation par les roues et munis de capteurs tachymétriques fournissant un signal représentatif de la vitesse périphérique de la roue correspondante. Les carcasses des moteurs électriques sont en général fixées au banc de freinage au moyen d'un capteur de force fournissant un signal représentatif des forces exercées sur les fixations des carcasses des moteurs lorsqu'on exerce en effort de freinage sur les roues de l'essieu en train d'être contrôlé.

Par mesure de sécurité, on prévoit de monter les cylindres indicateurs de la vitesse périphérique des roues contrôlées sur un système formant levier, qui est actionné lorsqu'une roue se trouve entre les rouleaux d'entraînement correspondants. L'enfoncement de ce levier provoque la fermeture d'un contact électrique d'autorisation de démarrage du moteur électrique d'entraînement des rouleaux.

De manière connue, le contrôle de freinage d'un véhicule à deux roues motrices s'effectue de la manière suivante :
a) Dans une première phase dans laquelle les deux roues sont simultanément entraînées dans le même sens et à la même vitesse, aucun effort de freinage n'est exercé sur la pédale de frein du véhicule par l'opérateur. Les capteurs de force précités fournissent des signaux représentatifs des valeurs résiduelles de freinage sur l'une et l'autre roue. Ces valeurs résiduelles généralement très faibles sont notables dans le cas d'un mauvais desserrement des freins ou d'une résistance à la rotation résultant par exemple d'un mauvais état des roulements.
b) Dans une deuxième phase dans laquelle les roues du même essieu sont entraînées en marche avant, une pression constante est appliquée sur la pédale de frein par l'opérateur. Les capteurs de force précités fournissent des valeurs représentatives des variations de freinage sur l'une et l'autre roue. Des variations de freinage sont représentatives de l'ovalisation des roues ou de défauts des organes de freinage : par exemple une déformation du tambour de frein dans le cas de freins à tambours, ou un voilage du disque dans le cas de freins à disques.
c) Dans une troisième phase dans laquelle les deux roues sont entraînées simultanément en marche avant, une pression est appliquée progressivement jusqu'à une valeur maximale sur la pédale de frein par l'opérateur. L'essai est arrêté lorsque le glissement relatif de la roue sur les rouleaux d'entraînement est égal à une valeur prédéterminée. La force de freinage maximale atteinte au cours de cet essai est relevée pour chaque roue de l'essieu contrôlé.

Les forces de freinage maximales sont comparées avec des paramètres fournis par le constructeur ou des paramètres calculés à partir d'essais précédents, de manière à déterminer si le freinage est satisfaisant ou insuffisant.

Pour les véhicules à deux roues motrices, les bancs de freinage dans lesquels les deux roues d'un essieu contrôlé sont simultanément entraînés en marche avant fournissent un procédé de contrôle de freinage et des résultats correspondants entièrement satisfaisants.

Il n'est pas possible d'utiliser le procédé et le mode de freinage connu pour contrôler le freinage d'un véhicule à quatre roues motrices, dans lequel un dispositif de transmission du mouvement intermédiaire tel qu'un visco coupleur ou un différentiel épicycloïdal renvoit une partie de l'énergie de l'essieu motorisé sur un autre essieu.

On a également constaté qu'il était impossible d'utiliser un seul banc de freinage pour faire tourner les deux roues d'un même essieu dans le même sens, l'autre essieu étant en contact du sol : en effet, dans le cas où les deux roues d'un même essieu sont entraînées dans le même sens, on constate que le véhicule est éjecté du banc de freinage, même à faible vitesse. Pour pallier ces inconvénients, on a envisagé :
1° - de monter le premier essieu d'un véhicule sur un banc de contrôle et de monter le deuxième essieu sur des roues libres en rotation. Une telle disposition exige, pour pouvoir contrôler les deux essieux, de monter des rouleaux libres de part et d'autre du banc de contrôle de freinage. Cependant, en raison d'une répartition inégale de l'énergie entre les quatre rouleaux, il y a une compensation des efforts et une réduction artificielle des dissymétries de freinage des roues gauche et droite de l'essieu contrôlé.
   Ainsi, ce système ne permet pas de donner les valeurs exactes des caractéristiques de freinage de chaque roue.
2° - de monter lesdits essieux simultanément sur deux bancs de contrôle. Cependant cette solution nécessite de régler l'écartement des deux bancs en fonction de l'empattement du véhicule et de régler la vitesse des quatre roues constamment à la même valeur au moyen d'un dispositif de régulation coûteux présentant des plages de stabilité limitées.

Une troisième solution est proposée par le document EP 0236 715, qui décrit un procédé et un dispositif de contrôle des freins de véhicules automobiles dotés de plusieurs essieux moteurs inamoviblement couplés entre eux, lesdits véhicules ayant un différentiel pour chaque essieu.

Les roues d'au moins un essieu sont entraînées dans des sens inverses par les premiers rouleaux d'un banc d'essai de frein, et sont freinées individuellement lors du contrôle, et l'action de freinage de ce frein sur l'entraînement du jeu de rouleaux de cette roue est lue. Dans les procédés et les dispositifs correspondants, la vitesse de rotation des roues entraînées est mesurée directement au cours du processus de freinage et est maintenue à une même valeur par commande des entraînements des jeux de rouleaux entraînant ces roues.

Le fait que la vitesse de rotation des roues est mesurée directement pendant le contrôle des freins et est maintenue à une valeur égale pour les deux roues a pour conséquence qu'il n'y a aucun mouvement de rotation de l'arbre de transmission à joint de cardan cinématiquement lié à l'essieu de ces deux roues par l'intermédiaire du différentiel, et qu'il n'y a par conséquent aucune transmission de couple aux autres essieux rigidement couplés à cet arbre de transmission.

Les vitesses de rotation mesurées des roues d'un essieu sont constamment comparées, soit à des valeurs de consigne, soit entre elles, et, par la régulation de la puissance d'entraînement des deux jeux de rouleaux en cause, sont maintenues à une même valeur. En pratique, la régulation correspondant à l'égalité des vitesses de rotation des deux roues entraînées en sens opposé l'une de l'autre est délicate à effectuer : il est donc indispensable de fixer des réflecteurs servant de marques sur les roues, ces réflecteurs renvoyant chacun le rayon lumineux d'une source vers un capteur pour fournir un signal représentatif de l'angle de rotation et de la vitesse angulaire de rotation de chaque roue.

Ce dispositif est susceptible de donner satisfaction, mais sa fabrication est coûteuse et sa mise en oeuvre délicate. Ce dispositif est d'un fonctionnement aléatoire car les salissures des roues projetées lors de la rotation viennent encrasser les réflecteurs optiques.

En outre, dans les véhicules à quatre roues motrices, le viscocoupleur ou le différentiel épicycloïdal a un couple de démarrage qui n'est pas nul. Ce couple peut provoquer des renvois de force de freinage, d'un côté sur l'autre, égal à ce couple. Le document EP 0 236 715 ne prévoit pas de moyen de mesure tenant compte de ces éventuels renvois de force de freinage.

L'invention a pour but de remédier aux inconvénients précités, en créant un nouveau dispositif de freinage, apte à être utilisé de manière traditionnelle pour le contrôle du freinage des véhicules à deux roues motrices, et apte à être utilisé au moyen du procédé suivant l'invention pour le contrôle de freinage des véhicules à quatre roues motrices, dans lesquels les essieux moteurs ne peuvent être découplés.

L'invention a pour objet un procédé de contrôle de freinage pour véhicules à roues, notamment pour véhicules comportant plusieurs essieux moteurs couplés entre eux, chaque essieu étant muni d'un différentiel, dans lequel on entraîne une roue à contrôler d'un essieu dans le sens de la marche avant, et l'autre roue du même essieu dans le sens de la marche arrière, caractérisé en ce que la vitesse du moyen d'entraînement de la roue à contrôler et la vitesse du moyen d'entraînement de l'autre roue sont différentes et en ce que la différence des deux vitesses est maintenue inférieure à une valeur choisie pour ne pas provoquer de mouvement d'un autre essieu du véhicule extérieur au banc de freinage.

Suivant d'autres caractéristiques de l'invention:
- la différence des deux vitesses est maintenue inférieure à 5% de la vitesse du moyen d'entraînement dans le sens de la marche avant,
- les moyens d'entraînement sont des moteurs électriques asynchrones et la fréquence du moteur d'entraînement en marche arrière est régulée en fonction de la différence des vitesses périphériques des deux roues.

Selon une variante de réalisation, le procédé selon l'invention comporte les étapes suivantes :
a) maintenir le moyen d'entraînement en marche avant à vitesse constante et le moyen d'entraînement en marche arrière à une vitesse continûment variable entre une vitesse minimale inférieure à ladite vitesse constante et une vitesse maximale supérieure à ladite vitesse constante, pour mesurer en l'absence de tout freinage les forces d'entraînement sur la roue à contrôler entraînée en marche avant et sur l'autre roue entraînée en marche arrière,
b) enregistrer la courbe de correction correspondant à la différence desdites forces d'entraînement en fonction de la différence des vitesses des moyens d'entraînement,
c) mesurer les vitesses périphériques respectives de la roue à contrôler et de l'autre roue en l'absence de tout freinage en maintenant constante la différence des vitesses des moyens d'entraînement et en corrigeant les forces mesurées grâce à la courbe de correction de l'étape b),
d) calculer et enregistrer la différence desdites vitesses périphériques corrigées en l'absence de tout freinage,
e) mesurer continûment pendant le freinage la différence des vitesses périphériques pour commander la vitesse du moyen d'entraînement en marche arrière en suivant une loi de consigne adaptée pour maintenir la différence des vitesses périphériques des roues inférieure à une valeur choisie,
f) mesurer les variations de freinage indiquant une ovalisation des roues, ou mesurer la force de freinage correspondant à une valeur de glissement maximale des roues sur les rouleaux,
g) corriger en continu les valeurs obtenues à l'étape f) grâce à la courbe de correction obtenue à l'étape b), qui fournit des valeurs instantanées de correction en fonction de la différente Δ des vitesses instantanées périphériques des roues.

L'invention a également pour objet un dispositif de contrôle de freinage pour véhicules à roues, du type comportant un banc de freinage pour un essieu; ledit banc de freinage comportant pour chaque roue de l'essieu une paire de rouleaux d'entraînement, un moyen indicateur de la vitesse périphérique de la roue et un moyen capteur de la force d'entraînement de la roue par la paire de rouleaux; chaque paire de rouleaux étant entraînée par un moteur d'entraînement, caractérisé en ce que le dispositif comporte un premier moyen d'alimentation ou de commande pour entraîner un premier moteur d'entraînement à une vitesse sensiblement fixe et un deuxième moyen d'alimentation ou de commande pour entraîner un deuxième moteur d'entraînement à une vitesse variable en fonction d'une loi de commande prédéterminée.

Selon d'autres caractéristiques de l'invention :
- les moteurs d'entraînement sont des moteurs électriques alimentés, soit par une alimentation électrique à fréquence constante (premier moyen), soit par une alimentation électrique à fréquence variable (deuxième moyen),
- la loi de commande prédéterminée comporte une première phase de variation continue de la vitesse du deuxième moteur d'entraînement,
- la loi de commande prédéterminée comprend une deuxième phase de variation de la vitesse du deuxième moteur d'entraînement, dans laquelle cette variation de vitesse s'effectue en fonction de la différence de la vitesse périphérique d'une première roue et de la vitesse périphérique d'une deuxième roue.

L'invention sera mieux comprise grâce à la description qui va suivre donnée à titre d'exemple non limitatif au regard des dessins annexés dans lesquels :

La figure 1 représente une vue générale schématique d'un dispositif selon l'invention.

La figure 2 représente une vue partielle agrandie en coupe du dispositif selon l'invention.

La figure 3 représente un schéma explicatif des étapes du procédé selon l'invention.

La figure 4 représente un deuxième schéma explicatif d'une variante du procédé selon l'invention.

La figure 5 représente une courbe caractéristique obtenue en mettant en oeuvre l'invention.

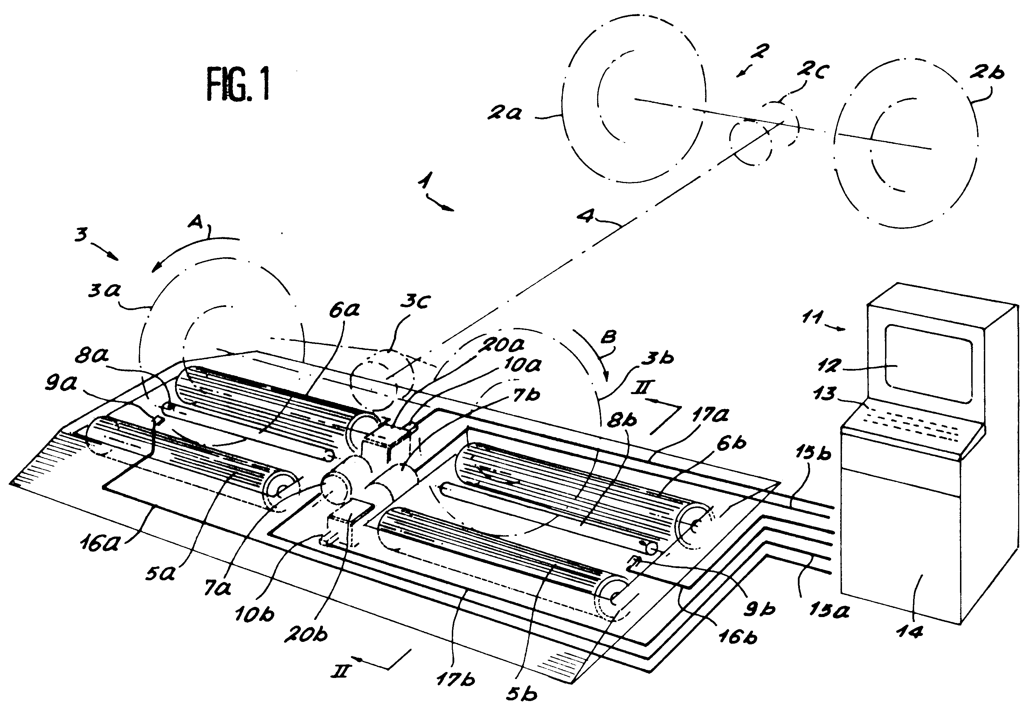

En référence à la figure 1, un véhicule à quatre roues schématisé en traits mixtes comporte un premier essieu 2, et un deuxième essieu 3. L'essieu 2 est muni de deux roues 2a, 2b et d'un différentiel 2c, tandis que l'essieu 3 est muni de deux roues 3a, 3b et d'un différentiel 3c : ces différentiels permettent d'entraîner la roue 2a en sens inverse de la roue 2b, ou la roue 3a en sens inverse de la roue 3b.

Les différentiels 2c, 3c sont liés par une liaison mécanique 4, qui peut être une barre rigide, mais plus généralement un moyen de couplage tel qu'un visco coupleur associé ou non à un dispositif de roue libre ou à un différentiel épicycloïdal.

Le type général de véhicule correspondant au véhicule 1 est par exemple un véhicule à 4 roues motrices du type dit à transmission intégrale dont les différentiels 2c et 3c permettent la rotation en sens inverse l'une de l'autre des roues adjacentes.

Les roues 3a et 3b sont montées sur des rouleaux entraîneurs 5a, 6a et 5b, 6b. Les rouleaux entraîneurs 5a, 6a sont entraînés de manière synchrone par un moteur 7a de manière à faire tourner la roue 3a dans le sens de la flèche A correspondant à la marche avant, tandis que les rouleaux d'entraînement 5b, 6b sont entraînés par un moteur électrique 7b, de manière à entraîner la roue 3b dans le sens de la flèche B correspondant à la marche arrière.

La vitesse péripherique de la roue 3a est obtenue au moyen d'un cylindre 8a de mesure entraîné par la roue 3a, ledit cylindre coopérant avec un capteur tachymétrique 9a situé à proximité immédiate d'une de ses extrémités. De manière analogue, la vitesse périphérique de la roue 3b est obtenue grâce au cylindre de mesure 8b et au capteur tachymétrique 9b. Les carcasses des moteurs 7a, 7b et les renvois d'angle éventuels sont montés sur le châssis du banc de freinage au moyen de capteurs de force 10a, 10b pour fournir un signal représentatif des forces de freinage appliquées par la roue sur les rouleaux pendant les essais de freinage.

Ces dispositions générales sont également connues pour l'entraînement des véhicules à 2 roues motrices : dans ce cas, les roues 3a et 3b sont entraînées dans le même sens de marche avant correspondant à la flèche A.

Le dispositif comporte en outre une borne 11 de commande interactive, munie d'un écran de visualisation 12, et d'un clavier d'entrée de données 13. La borne 11 de commande et de contrôle comporte en partie inférieure 14 une alimentation électrique reliée aux moteurs 7a, 7b par des câbles d'alimentation 15a, 15b, et des cartes électroniques de traitement des signaux reçus par les lignes de transmission : à savoir, pour la transmission des vitesses périphériques des roues, 16a, 16b, pour la transmission des signaux représentatifs des efforts de freinage 17a, 17b.

Selon l'invention, le dispositif est agencé de manière à entraîner la roue 3a dans le sens de la marche avant A à une vitesse sensiblement fixe, par exemple en alimentant un moteur électrique asynchrone 7a à une fréquence fixe, et de manière à entraîner un deuxième moteur d'entraînement en marche arrière B à une vitesse variable en fonction d'une loi de commande prédéterminée. On utilise de préférence à cet effet un variateur de vitesse à variation de fréquence qui permet d'entraîner les rouleaux 5b, 6b à une vitesse variable en fonction de la fréquence variable alimentant le moteur 7b, en veillant toutefois à ce que la différence des vitesses absolues entre la marche avant A et la marche arrière B ne soit pas supérieure à une vitesse provoquant l'éjection du véhicule hors du banc de freinage.

En effet, lorsque la différence des vitesses absolues des rouleaux entraîneurs est maintenue inférieure à 5% de la vitesse du moyen d'entraînement constitué par les rouleaux 5a, 6a dans le sens de la marche avant A, on comprend que l'énergie transmise au différentiel arrière 2c est relativement faible et n'est pas susceptible de provoquer une éjection du véhicule hors du banc.

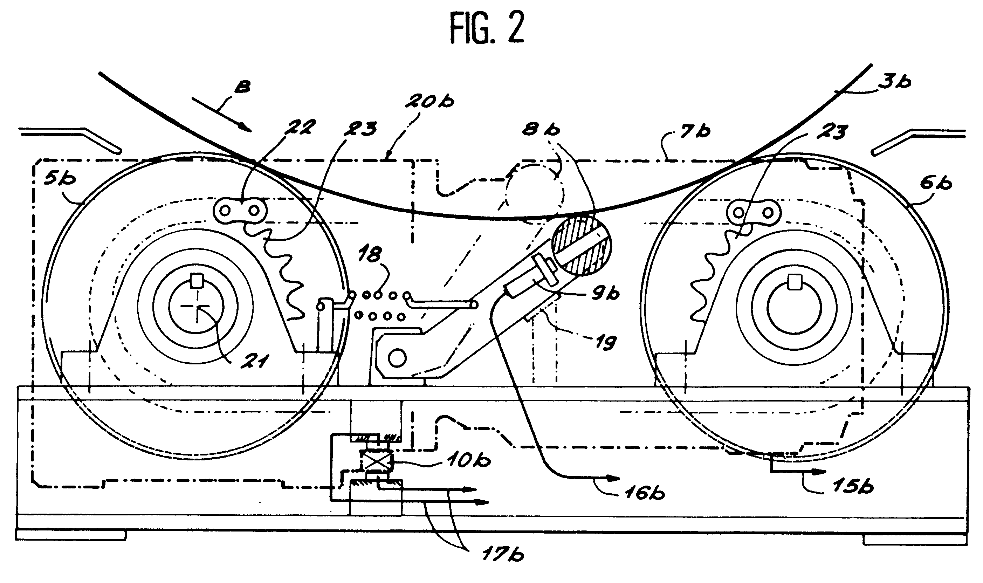

En référence à la figure 2, la roue 3b présente dans le banc de freinage, applique le cylindre de mesure 8b vers le bas à l'encontre d'un ressort 18 destiné à rappeler le cylindre 8b dont la position indiquée en traits mixtes. Dans la position basse représentée en traits pleins, un capteur de présence 19 fournit un signal d'autorisation de démarrage du moteur d'entraînement 5b alimenté par un câble d'alimentation 15b et interdit tout démarrage intempestif du moteur 5b en l'absence d'une roue dans le banc de freinage. Le moteur 5b entraîne au moyen d'un renvoi d'angle 20b un arbre 21 faisant partie d'une transmission par chaîne 22 et pignons 23, qui entraîne les 2 rouleaux d'entraînement 5b, 6b.

Le capteur de force 10b situé ici en position intermédiaire fournit un signal de force négative ou de force positive suivant le sens d'entraînement de la roue 3b, ce signal étant transmis par une liaison filaire 17b à une borne de commande et d'alimentation 11 non représentée.

Contrairement au procédé décrit dans le document EP 0 236 715, qui prévoit de maintenir constamment égales les vitesses de rotation des deux roues entraînées en sens inverse l'une de l'autre, la présente invention prévoit de mesurer des caractéristiques réelles de freinage en tenant compte également des couples de démarrage des différentiels 2c, 3c et de la liaison cinématique 4 entre ces deux différentiels 2c, 3c : à cet effet, on prévoit que la vitesse de rotation en marche avant dans le sens A de la roue 3a soit légèrement différente de la vitesse de rotation de la roue 3b dans le sens de la marche arrière B, ce qui provoque un très léger entraînement du différentiel 3c et permet de tenir compte du couple de démarrage de ce différentiel 3c dans le contrôle du freinage.

En outre, lorsqu'on prévoit d'alimenter un banc de freinage de structure classique de manière à entraîner les roues en marche avant à la même vitesse, il est possible de contrôler sur le même banc des véhicules à 2 roues motrices et des véhicules à 4 roues motrices, ce qui permet soit d'utiliser les bancs de l'art antérieur au moyen d'une nouvelle installation de commande d'un dispositif selon l'invention, ou de tester un véhicule à 2 roues motrices également au moyen du dispositif selon l'invention par une simple commutation des alimentations des moteurs 7a, 7b.

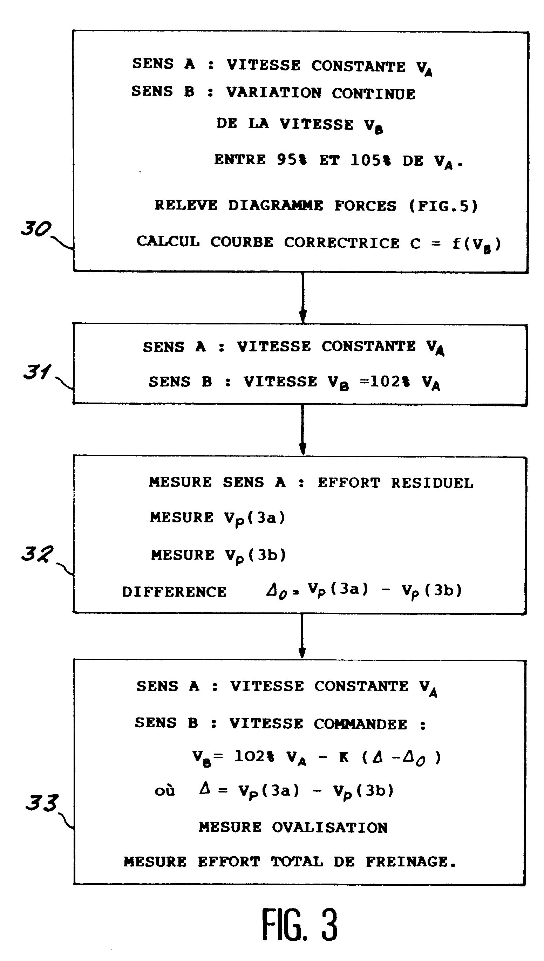

En référence à la figure 3, un procédé de contrôle de freinage pour véhicules à roues comportant plusieurs essieux moteurs couplés entre eux, chaque essieu étant muni d'un différentiel, dans lequel on entraîne une roue à contrôler dans le sens de la marche avant et l'autre roue du même essieu dans le sens de la marche arrière, comporte les étapes suivantes :

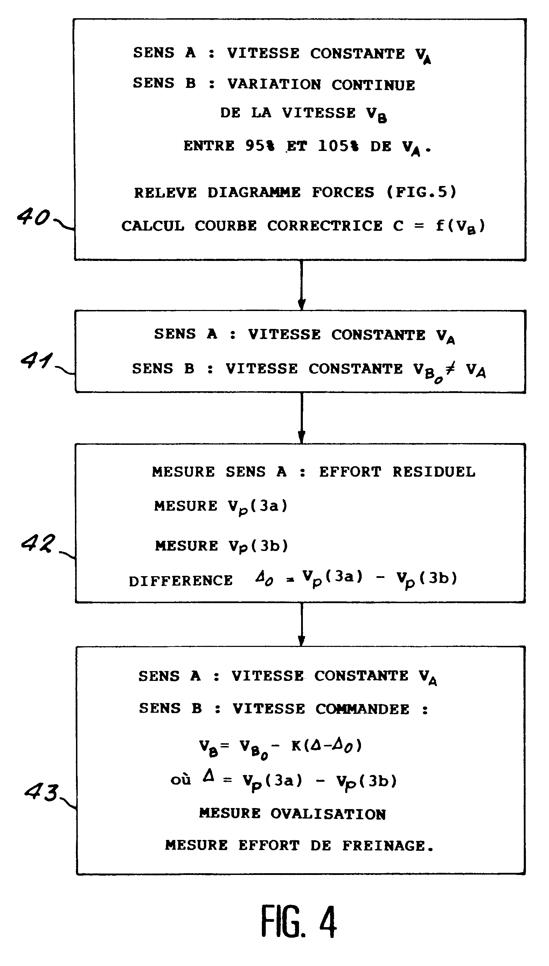

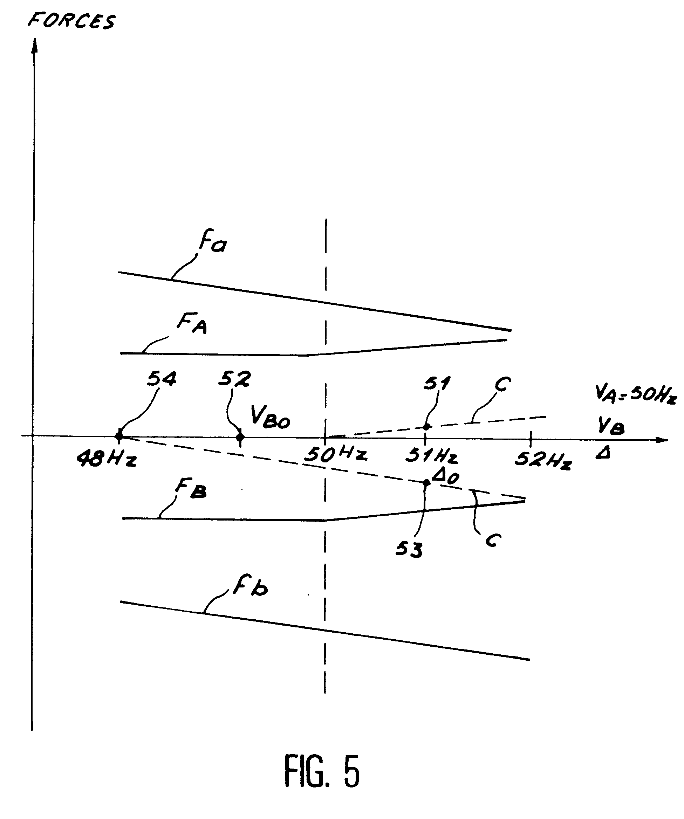

A l'étape 30, la vitesse du moteur 7a d'entraînement en marche avant A est maintenue sensiblement constante en étant alimentée par la fréquence électrique du réseau, typiquement 50 Hz en France. Par contre, la vitesse d'entraînement du moteur 7b en marche arrière B varie continûment d'une valeur minimale inférieure d'environ 5% à la vitesse d'entraînement dans le sens de la marche avant A jusqu'à une valeur maximale supérieure d'environ 5% à la vitesse du moyen d'entraînement en marche avant A. Cette variation de vitesse peut s'obtenir simplement en faisant varier la fréquence d'alimentation du moteur 7b de par exemple 48 Hz à 52 Hz. Pendant cette variation, on enregistre les courbes représentatives des forces exercées par le roues au contact des rouleaux d'entraînement pour obtenir un diagramme tel que celui représenté à la figure 5.

Ces forces d'entraînement en l'absence de tout freinage correspondent aux efforts de démarrage du différentiel 3c et aux efforts résistants des roues 3a et 3b qui sont en général très faibles. A partir du relevé du diagramme des forces, on calcule une courbe de correction correspondant à l'addition algébrique des forces résultant respectivement de la marche avant d'une roue et de la marche arrière de l'autre roue.

A l'étape 31, on entraîne la roue 3a dans le sens de la marche avant A à une vitesse constante et la roue 3b dans le sens de la marche arrière B à une vitesse supérieure de 2% à la vitesse d'entraînement dans le sens de la marche avant A.

Pour ce faire, on entraîne par exemple le moteur 7a à 50 Hz dans le sens correspondant à la marche avant A, et le moteur 7b à une fréquence d'alimentation de 51 Hz dans le sens correspondant à la marche arrière B; on attend ensuite que le mouvement soit totalement stabilisé pour passer à l'étape suivante 32.

A l'étape 32, on maintient les conditions d'entraînement en rotation de l'étape 31, et on mesure l'effort produit par la roue 3a en rotation en marche avant A. Cette mesure est effectuée en l'absence de tout freinage et fournit les efforts résiduels correspondant à l'entraînement de la roue en marche avant A. De préférence, on effectue plusieurs mesures de manière à obtenir une moyenne statistique à partir de plusieurs acquisitions de mesures.

On mesure également les valeurs absolues de la vitesse périphérique V_{P} (3a) de la roue 3a et de la vitesse périphérique V_{P} (3b) de la roue 3b au moyen de cylindres de mesure 8a, 8b et des capteurs tachymétriques 9a, 9b. On calcule ensuite la différence Δₒ de la vitesse périmètrique moyenne entre les roues 3a et 3b.

A l'étage 33, on entraîne le moteur 7a à une vitesse sensiblement constante et on asservit la vitesse du moteur 7b à une boucle de commande proportionnelle (éventuellement intégrale et dérivée) de manière à suivre une loi de vitesse correspondant à la loi de commande suivante : V_{B} = 102% V_{A} -K (Δ -Δₒ), où K est une constante de proportionnalité déterminée expérimentalement pour obtenir une bonne stabilité de la boucle de contre-réaction et un temps de réponse suffisamment court;
Δ est égal à la différence des vitesses instantanées périphériques mesurées V_{P} (3a), V_{P} (3b) des roues 3a et 3b respectivement;
Δₒ est la constante de correction correspondant à la différence des vitesses périphériques des roues 3a et 3b mesurées à l'étape 32.

On mesure ensuite l'ovalisation de la roue 3a entraînée en marche avant A par les essais de freinage de type connu en corrigeant en continu les valeurs d'effort obtenues grâce à la courbe C de correction obtenue à l'étape 30, qui fournit des valeurs instantanées de correction en fonction de la différence Δ des vitesses instantanées périphériques des roues 3a et 3b.

On mesure ensuite l'effort de freinage maximal correspondant à un glissement prédéterminé de la roue 3a entraînée en marche avant et on procède, en continu à une correction d'effort analogue à celle effectuée pour la mesure de l'ovalisation.

Ainsi, grâce au procédé suivant l'invention, on peut obtenir les valeurs correspondant véritablement aux efforts de freinage sur une roue entraînée en marche avant A d'un véhicule à 4 roues motrices couplées l'une à l'autre par une transmission à mécanisme central 4. En outre, le procédé suivant l'invention permet le contrôle du freinage sans utiliser de capteur optique de vitesse angulaire ou de système de régulation coûteux, tels que ceux décrits dans le document EP 0 236 715.

En référence à la figure 4, une variante de réalisation du procédé selon l'invention comporte une première étape 40 identique à l'étape 30 décrite en référence à la figure 3. Cette étape permet ainsi de calculer et d'effectuer l'enregistrement d'une courbe correctrice en fonction de la variation de la vitesse du moteur d'entraînement 7b correspondant à un entraînement en marche arrière B.

A l'étape suivante 41, le moyen d'entraînement 7a est entraîné à une vitesse V_{A} par exemple au moyen d'une fréquence d'alimentation de 50 Hz tandis que le moyen d'entraînement 7b est entraîne à une vitesse constante V_{Bo} différente de la vitesse constante V_{A}. De préférence, la vitesse V_{Bo} est choisie en correspondance avec un point qui correspond à une égalité des valeurs absolues des forces d'entraînement en marche avant et en marche arrière, comme décrit plus loin en référence à la figure 5. On attend la stabilisation du régime d'entraînement de la roue 3a en marche avant A et de la roue 3b en marche arrière B avant de passer à l'étape suivante 42

A l'étape 42, les conditions d'entraînement en rotation sont celles de l'étape 41, et on effectue des mesures analogues à celles réalisées à l'étape 32 décrite en référence à la figure 3.

A l'étape 43, le moyen d'entraînement 7a est alimenté à une fréquence fixe correspondant à une vitesse d'entraînement de rotation en marche avant V_{A}, tandis que le moyen d'entraînement 7b est entraîné suivant une vitesse V_{B} réglée par une boucle de commande à contre-réaction pour suivre la loi de commande suivante : V_{B} =V-_{Bo} -K (Δ -Δₒ), où V_{Bo} est la vitesse constante d'entraînement utilisée à l'étape 41.

K est une constante de proportionnalité déterminée expérimentalement pour obtenir une bonne stabilité de la boucle de contre-réaction et un temps de réponse suffisamment court,
Δ est la différence des vitesses instantanées périphériques des roues 3a et 3b,
Δₒ est la différence correspondant à la correction déterminée à l'étape 42.

On mesure ensuite d'une manière classique l'ovalisation ainsi que l'effort total de freinage de manière analogue aux mesures effectuées pour les véhicules à deux roues motrices en effectuant en continu la correction décrite à l'étape 33.

En référence à la figure 5, les courbes FA, FB correspondent aux forces d'entraînement mesurées au contact des rouleaux respectivement d'une roue avant 3a entraînée en marche avant dans le sens A, et d'une roue avant 3b entraînée en arrière dans le sens B.

La somme algébrique C des courbes FA, FB en fonction de la variation de la vitesse d'entraînement V_{B} du moteur 7b résultant d'une variation de fréquence progressive de 48 à 50 Hz s'obtient par addition algébrique des courbes FA et FB. On voit que la courbe de correction C est nulle jusqu'à une valeur correspondant à 50 Hz et remonte légèrement entre 50 Hz et 52 Hz. On a constaté que, sur un même essieu, la courbe de correction C ne varie pas quel que soit l'effort de freinage appliqué avec une pression constante mesurée au moyen d'un pédomètre sur la pédale de frein du véhicule.

Bien entendu, la courbe de correction C en l'absence de tout freinage correspond également à la correction dépendant de la différence Δ des vitesses instantanées périphériques des roues 3a et 3b.

Dans cet exemple, selon le procédé décrit en référence à la figure 3, on choisit comme correction d'erreur la valeur de C correspondant à 51 Hz repérée par le point 51 suivant la figure 5.

Selon le procédé décrit en référence à la figure 4, on choisit comme vitesse V_{Bo} une valeur correspondant à un correctif C nul c'est à dire une valeur de vitesse correspondant à une fréquence comprise entre 48 Hz et 50 Hz, par exemple tel que référencé 52 sur la figure 5. On voit ainsi que le deuxième procédé décrit en référence à la figure 4 correspond à une bonne répartition des forces entre les deux roues et à une minimisation de l'effort appliqué au différentiel 3c et à la ligne de transmission mécanique 4.

Sur la figure 5, on a également représenté des efforts correspondant à l'essieu arrière du même véhicule à 4 roues motrices : l'effort d'entraînement en marche avant est représenté par la droite fa tandis que l'effort d'entraînement en marche arrière est représenté par la droite fb.

De manière analogue, on obtient par somme algébrique la courbe de correction c représentative de l'effort dû à la viscosité de la ligne de transmission 4 ou de démarrage du différentiel 3c. On voit que selon le procédé représenté en référence à la figure 3, le point de fonctionnement 53 correspond à la correction à appliquer à une fréquence de 51 Hz.

Lorsque l'on applique le procédé décrit en référence à la figure 4, le point de fonctionnement 54 correspond à la vitesse V_{Bo} correspondant à une égalité des efforts d'entraînement sur les roues entraînées en sens inverse l'une de l'autre.

L'invention a été appliquée à la mesure et au contrôle de freinage sur les véhicules à 4 roues motrices existant sur le marché français et a donné entièrement satisfaction.

L'invention décrite en référence à des moyens d'entraînement constitués par des moteurs électriques n'y est nullement limitée, mais englobe au contraire toute variante de moyen d'entraînement : hydraulique, pneumatique ou autre susceptible d'être piloté par une boucle de contre-réaction pour suivre une loi de commande prédéterminée.

## Revendications

**1.-** Procédé de contrôle de freinage pour véhicule à roues, notamment pour véhicules comportant plusieurs essieux moteurs couplés entre eux, chaque essieu étant muni d'un différentiel, dans lequel on entraîne une roue à contrôler d'un essieu dans le sens de la marche avant, et l'autre roue du même essieu dans le sens de la marche arrière, caractérisé en ce que la vitesse (V_{A}) du moyen d'entraînement (7a) de la roue (3a) à contrôler et la vitesse (V_{B}) du moyen d'entraînement (7b) de l'autre roue (3b) sont différentes et en ce que la différence des deux vitesses (V_{A},V_{B}) est maintenue inférieure à une valeur choisie pour ne pas provoquer de mouvement d'un autre essieu du véhicule extérieur au banc de freinage.

**2.-** Procédé selon la revendication 1 caractérisé en ce que la différence des deux vitesses (V_{A}, V_{B}) est maintenue inférieure à 5% de la vitesse (V_{A}) du moyen d'entraînement (7a) dans le sens de la marche avant (A).

**3.-** Procédé selon la revendication 1 ou la revendication 2, caractérisé en ce que les moyens d'entraînement sont des moteurs électriques (7a, 7b) asynchrones et en ce que la fréquence du moteur d'entraînement (7b) en marche arrière (B) est régulée en fonction de la différence (Δ) des vitesses périphériques des deux roues (3a, 3b).

**4.-** Procédé selon l'une des revendications précédentes, comportant les étapes suivantes :
a) maintenir le moyen d'entraînement (7a) en marche avant (A) à vitesse constante (V_{A}) et le moyen d'entraînement (7b) en marche arrière (B) à une vitesse (V_{B}) continûment variable entre une vitesse minimale inférieure à ladite vitesse constante (V_{A}), pour mesurer en l'absence de tout freinage les forces d'entraînement sur la roue à contrôler (3a) entraînée en marche avant (A) et sur l'autre roue (3b) entraînée en marche arrière (B);
b) enregistrer la courbe de correction (C,c) correspondant à la différence desdites forces d'entraînement (Fₐ,F_{b};f_{A},f_{B}) en fonction de la différence des vitesses (V_{A}, V_{B}) des moyens d'entraînement ou de la différence des vitesses périphériques (V_{P}) des roues (3a, 3b).

**5.-** Procédé de contrôle selon la revendication 4 caractérisé par les étapes supplémentaires suivantes :
c) mesurer les vitesses périphériques respectives de la roue (3a) à contrôler et de l'autre roue (3b) en l'absence de tout freinage en maintenant constante la différence des vitesses (V_{A}, V_{B}) des moyens d'entraînement (7a, 7b) et en corrigeant les forces mesurées grâce à la courbe de correction de l'étape b);
d) calculer et enregistrer la différence (Δₒ) desdites vitesses périphériques corrigées en l'absence de tout freinage.

**6.-** Procédé de contrôle selon la revendication 5, caractérisé par les étapes supplémentaires suivantes :
e) mesurer continûment pendant le freinage la différence (Δ) des vitesses périphériques pour commander la vitesse (V_{B}) du moyen d'entraînement (7b) en marche arrière (B) en suivant une loi de consigne adaptée pour maintenir la différence (Δ) des vitesses périphériques des roues (3a, 3b) inférieure à une valeur choisie;
f) mesurer les variations de freinage indiquant une ovalisation des roues (3a), ou mesurer la force de freinage correspondant à une valeur de glissement maximale des roues (3a) sur les rouleaux (5a, 6a), et corriger les mesures obtenues grâce à la courbe de correction (c, C) obtenue à l'étape b).

**7.-** Dispositif de contrôle de freinage pour véhicules à roues, du type comportant un banc de freinage pour un essieu; ledit banc de freinage comportant pour chaque roue de l'essieu une paire de rouleaux d'entraînement, un moyen indicateur de la vitesse périphérique de la roue et un moyen capteur de la force d'entraînement de la roue par la paire de rouleaux; chaque paire de rouleaux étant entraînée par un moteur d'entraînement, caractérisé en ce que le dispositif comporte un premier moyen d'alimentation ou de commande pour entraîner un premier moyen (7a) d'entraînement à une vitesse (V_{A}) sensiblement fixe et un deuxième moyen d'alimentation ou de commande pour entraîner un deuxième moteur d'entraînement (7b) à une vitesse variable (V_{B}) en fonction d'une loi de commande prédéterminée.

**8.-** Dispositif selon la revendication 7, caractérisé en ce que les moteurs d'entraînement sont des moteurs électriques alimentés, soit par une alimentation électrique à fréquence constante (premier moyen), soit par une alimentation électrique à fréquence variable (deuxième moyen).

**9.-** Dispositif selon la revendication 7 ou la revendication 8, caractérisé en ce que la loi de commande prédéterminée comporte une première phase (30, 40) de variation continue de la vitesse (V_{B}) du deuxième moteur d'entraînement (7b).

**10.-** Dispositif selon l'une des revendications précédentes, caractérisé en ce que la loi de commande prédéterminée comprend une deuxième phase (33,43) de variation de la vitesse (V_{B}) du deuxième moteur d'entraînement (7b) dans laquelle cette variation de vitesse s'effectue en fonction de la différence (Δ) de la vitesse périphérique d'une première roue (3a) et de la vitesse périphérique d'une deuxième roue (3b).
